# FASCICULE DE BREVET EUROPEEN

(11) **EP 0 620 099 B1**
(45) Date de publication et mention de la délivrance du brevet: **04.12.1996**
(21) Numéro de dépôt: 94400808.5
(22) Date de dépôt: 13.04.1994
(51) Int. Cl.: B29C 49/64, B29C 49/68

(54) **Procédé et installation pour le traitement thermique du corps d'une préforme ou d'un récipient intermédiaire en matériau thermoplastique**
Verfahren und Anlage für die thermische Behandlung von Vorformkörpern oder eines Zwischenbehälters aus thermoplastischem Material
Process and apparatus for the thermal treatment of a preform's body or of an intermediate container, made of thermoplastic material

(30) Priorité: 15.04.1993 FR 9304447
(43) Date de publication de la demande: 19.10.1994
(73) Titulaire: SIDEL, F- 76053 Le Havre Cedex (FR)
(72) Inventeur: Emmer, Gérard, c/o SIDEL, F-76053 Le Havre Cédex (FR); La Barre, Paul, c/o SIDEL, F-76053 Le Havre Cédex (FR)
(74) Mandataire: Jacquelin, Marc-Henri

(56) Documents cités:
- DE-A- 2 211 307
- DE-A- 4 033 531
- DE-C- 903 628
- FR-A- 2 140 170
- FR-A- 2 305 292
- GB-A- 2 138 735
- US-A- 3 950 459
- US-A- 4 928 835

## Description

La présente invention concerne des perfectionnements apportés au traitement thermique du corps d'une préforme ou d'un récipient intermédiaire en matériau thermoplastique, effectué au cours du processus de fabrication d'un récipient, tel qu'un flacon ou une bouteille, notamment par soufflage ou étirage-soufflage, traitement thermique au cours duquel la préforme, tout en étant mise en rotation sur elle-même, est déplacée à travers un four de chauffage, pour que l'ensemble du corps de la préforme soit chauffé à une température supérieure à la température de ramollissement du matériau.

Il existe des procédés de fabrication mettant en oeuvre une seule étape de soufflage. Ils consistent, partant d'une préforme obtenue par injection, à chauffer cette préforme, puis à la souffler, en l'étirant éventuellement, pour obtenir le récipient définitif.

Il existe aussi des procédés mettant en oeuvre plusieurs étapes, distinctes, de soufflage et/ou d'étirage-soufflage. Ils consistent, partant d'une préforme obtenue par injection, à obtenir par un premier soufflage un récipient intermédiaire, qui est lui-même réchauffé, puis soufflé à nouveau pour obtenir le récipient final. Un tel procédé, avec ses diverses étapes, est décrit précisément dans les documents EP-A-0 442 836 ou US-A-5 229 042 au nom de la Demanderesse. Pour fixer les idées, on a représenté, sur la figure 1 ci-annexée, les formes schématiques obtenues au cours du déroulement d'un procédé à deux étapes successives de soufflage et/ou d'étirage-soufflage mené dans les conditions indiquées dans les susdits documents : la préforme initiale 1 (obtenue par exemple par moulage par injection) est transformée, par un premier soufflage ou étirage-soufflage, en un récipient 1₁ surdimensionné (longitudinalement et/ou transversalement), lequel est ensuite soumis à un traitement thermique qui, en raison de la libération des contraintes, conduit à un récipient intermédiaire rétréci 1₂ ; celui-ci est soumis à son tour, soufflage au terme duquel est obtenu le récipient définitif 1₃.

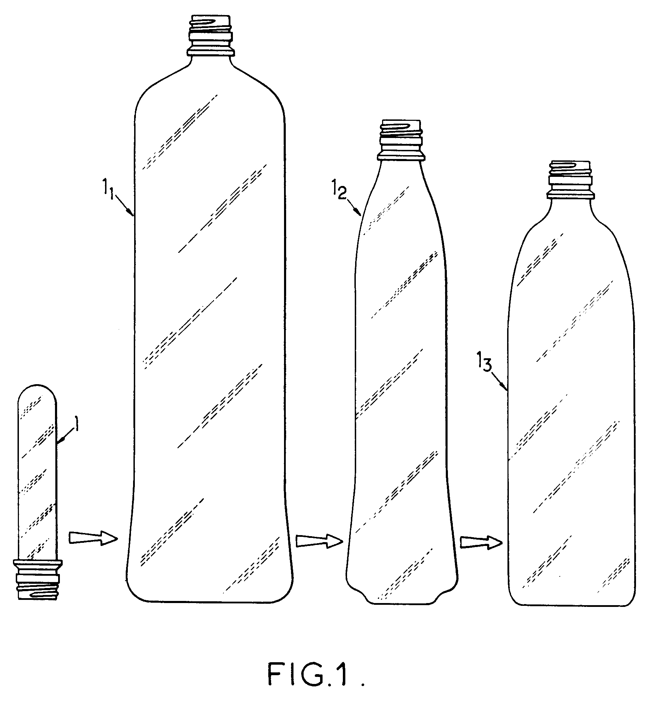

Comme représenté à la figure 1 des dessins ci-annexés, sur une préforme 1 de récipient, obtenue par exemple par moulage par injection, qui présente un corps 2 sensiblement cylindrique de révolution avec une paroi épaisse et avec, à une extrémité, un fond hémisphérique 3 à paroi épaisse et, à l'autre extrémité, un goulot 4 conformé à sa forme et à ses dimensions définitives, l'étape de chauffage préliminaire susindiquée consiste à chauffer le corps seul de la préforme (en excluant le goulot) à une température supérieure à la température de transition vitreuse Tg du matériau thermoplastique constitutif de la préforme.

En pratique, le chauffage est effectué en faisant défiler les préformes dans un four 5 comportant au moins une paroi latérale chauffante (par exemple constituée par des tubes de chauffage 6 fixés à la paroi du four), avec simultanément mise en rotation des préformes sur elles-mêmes (flèche 7) pour homogénéiser la température au sein du matériau. Des moyens de protection (caches 8 en forme de rails parallèles) assurent la protection thermique du goulot 4. Un panneau réfléchissant 9 peut de préférence être disposé en regard des tubes 6 pour réfléchir vers les corps 2 des préformes la fraction du rayonnement chauffant passant entre deux corps successifs.

Dans le cas de la fabrication de récipients à corps de forme générale approximativement cylindrique de révolution, le processus subséquent de soufflage ou d'étirage-soufflage, effectué dans un moule sur la préforme chauffée et/ou sur le récipient intermédiaire, provoque un étirement sensiblement homogène du matériau thermoplastique chaud et ramolli dans toutes les directions radiales (considérées par rapport à l'axe de la préforme). On obtient alors un récipient à corps de constitution régulière et homogène, présentant une paroi latérale d'épaisseur sensiblement constante.

Toutefois, on se heurte à des difficultés lorsqu'on cherche à s'écarter de ce processus traditionnel.

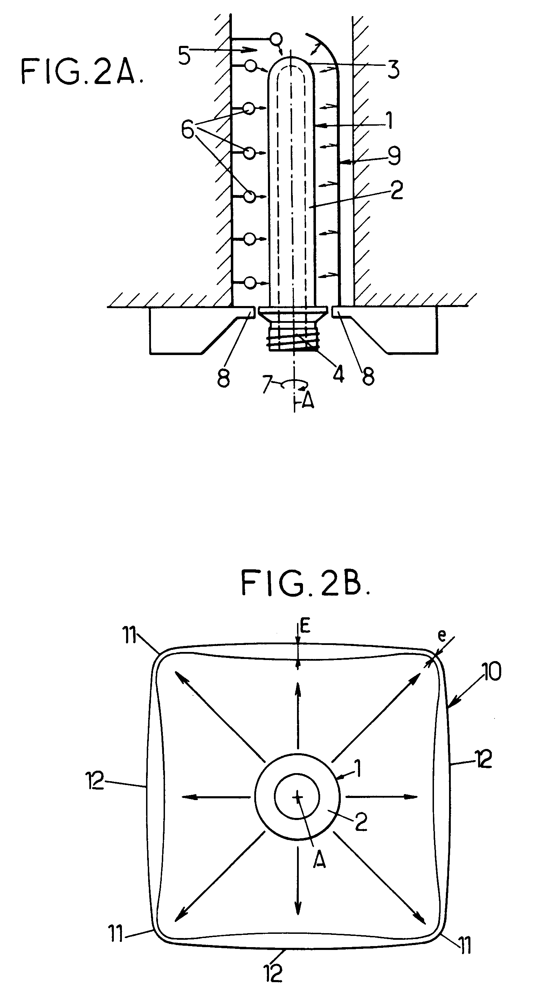

Tout d'abord, des difficultés surgissent lorsque le récipient final à obtenir n'est pas approximativement cylindrique de révolution : par exemple des récipients de section transversale polygonale (triangulaire, quadrangulaire ou pentagonal notamment) dans lesquels chaque face approximativement plane s'écarte sensiblement d'une surface cylindrique enveloppant les arêtes, ou des récipients à corps aplatis (du genre par exemple flacons pour produits lessiviels). Dans ce cas, comme montré à la figure 2 pour un récipient à corps 10 de section approximativement carrée, le matériau des parties de paroi du récipient final qui sont les plus éloignées de l'axe A de la préforme initiale 1 (parties d'angle 11) subit un étirement de beaucoup supérieur à celui subi par le matériau des parties de paroi qui demeurent les plus proches dudit axe (partie centrale 12 des parois). Du fait que le chauffage homogène confère au matériau les mêmes caractéristiques d'étirement quelles que soient les parties du corps de la préforme, l'étirement supérieur des parties de paroi 11 finalement les plus éloignées de l'axe A du corps de la préforme 1 s'accompagne d'un amincissement accru de cette partie de paroi. On obtient alors, finalement, un récipient à paroi d'épaisseur non constante, plus mince (épaisseur e) dans les parties 11 éloignées de l'axe A du corps de la préforme de départ (zones d'angle dans un corps prismatique, zones de petite courbure dans un corps de section ovale ou elliptique) et plus épaisse (épaisseur E) dans les parties 12 plus proches de l'axe A de la préforme de départ.

La tenue mécanique d'un corps de récipient présentant une telle configuration non homogène n'est pas satisfaisante.

En outre, les parties de paroi les plus minces doivent posséder une résistance mécanique suffisante et l'épaisseur de ces parties de paroi doit rester supérieure à une valeur minimale prédéterminée. Il en résulte que, dans les parties de paroi les plus épaisses, l'épaisseur de la paroi est excessive et la quantité de matériau qui y est présente est surabondante pour la résistance mécanique souhaitée. Il y a donc gaspillage de matière première.

De plus, pour les récipients à corps aplati apparaît une déformation (connue en terme de métier sous la désignation "panneling") sur les parties de paroi qui demeurent au plus près de l'axe de la préforme. Cette déformation est due au fait que, dans cette partie de paroi, l'épaisseur est trop importante et que la matière présente un phénomène de mémoire dû à une non-homogénéité de l'étirage. L'épaisseur trop importante est, quant à elle, provoquée par le fait que, lors du soufflage, la préforme entre d'abord en contact avec la paroi du moule la plus proche de l'axe de la préforme.

Le même inconvénient se retrouve sur le fond de forme complexe (par exemple forme très ovale) du récipient, où les épaisseurs de la zone de contact du récipient avec un plan qui sont les plus éloignées du centre sont beaucoup plus faibles que celles les plus proches du centre.

Enfin, tous ces inconvénients sont encore accrus lorsque le récipient final, obtenu à partir de la préforme à symétrie radiale complète, est quasi asymétrique (goulot très excentré par rapport à un corps prismatique ou aplati pouvant en outre présenter une poignée de préhension par exemple).

En outre, on se heurte à d'autres difficultés lorsqu'on cherche à renforcer la rigidité du corps du récipient en lui faisant comporter une ou plusieurs zones de renfort annulaires. On connaît une solution qui, dans ce but, consiste à faire cristalliser une ou plusieurs zones annulaires du corps. Bien que le matériau cristallisé possède certes une rigidité plus élevée, cette solution n'est cependant pas appréciée dans la pratique, ne serait-ce qu'en raison de la coloration présentée par le matériau cristallisé qui confère un aspect esthétique peu agréable au récipient.

Les inconvénients précités apparaissent indifféremment dans les procédés mettant en oeuvre une seule ou plusieurs étapes de soufflage.

En effet, le récipient intermédiaire, dans le cas d'un procédé à plusieurs étapes de soufflage, occupe vis-à-vis de la préforme initiale une situation analogue à celle occupée, dans un procédé à une seule étape de soufflage, par le récipient final vis-à-vis de la préforme initiale : ainsi le récipient intermédiaire obtenu au cours de la mise en oeuvre d'un procédé à plusieurs étapes de soufflage peut, en fait, être assimilé à une préforme spéciale obtenue non pas par injection, mais par soufflage d'une préforme primaire obtenue, elle, par injection.

Aussi, dans la suite du texte, le terme "préforme" pourra être compris comme désignant aussi bien la préforme initiale obtenue par injection et utilisée dans les procédés à une seule étape de soufflage conduisant directement au récipient final ou dans les procédés à plusieurs étapes de soufflage conduisant au récipient intermédiaire, que le récipient intermédiaire lui-même dans le cas d'un procédé à plusieurs étapes de soufflage.

Les inconvénients précités sont tels qu'ils ont considérablement freinés, jusqu'à présent, le développement de la fabrication de récipients à corps de forme complexe par la technique du soufflage ou de l'étirage-soufflage à partir d'une préforme à paroi épaisse (notamment à corps cylindrique de révolution).

L'invention a précisément pour objet de remédier aux inconvénients ci-dessus exposés et de proposer des moyens -procédé et installation- qui permettent de traiter thermiquement la préforme (ou un récipient intermédiaire) dans des conditions telles que le récipient finalement obtenu présente les caractéristiques souhaitables et notamment une paroi d'épaisseur approximativement constante quelle que soit sa forme et en quelque endroit de son corps que ce soit et/ou des zones périmétriques de renfort mécanique et qui, par voie de conséquence, permettent d'économiser sur la matière utilisée pour la fabrication de chaque récipient, sans qu'il en résulte pour autant un amoindrissement des caractéristiques mécaniques du récipient ni un accroissement du cout et de la complexité des installations employées à cet effet.

Dans ce but, l'invention propose, selon un premier de ses aspects, un procédé de traitement thermique du corps, y compris le fond, d'une préforme (ou un récipient intermédiaire) en matériau thermoplastique effectué au cours d'un processus de fabrication d'un récipient, tel qu'un flacon ou une bouteille, notamment par soufflage ou étirage-soufflage, traitement thermique au cours duquel la préforme, tout en étant mise en rotation sur elle-même, est déplacée à travers un four de chauffage pour que l'ensemble du corps de la préforme soit chauffé à une température supérieure à la température de ramollissement du matériau thermoplastique, lequel procédé se caractérise essentiellement en ce qu'au moins une partie de la longueur du corps de la préforme en rotation sur elle-même est amenée à passer alternativement devant des zones chauffantes et des zones moins ou pas chauffantes situées au moins d'un côté de la trajectoire suivie dans le four par la préforme pour qu'au moins une portion longitudinale du corps de la préforme, ou plusieurs portions longitudinales séparées circonférentiellement les unes des autres, qui s'étend sur au moins ladite partie de la longueur du corps soit portée à une température encore supérieure à celle du reste du corps, l'espacement des zones chauffantes étant déterminé en fonction du nombre des portions longitudinales du corps de préforme devant être chauffées préférentiellement et du périmètre du corps de la préforme, de manière telle que les portions longitudinales du corps de préforme à chauffer préférentiellement se présentent devant des zones chauffantes successives au cours des mouvements de déplacement et de rotation combinés de la préforme tandis que les portions longitudinales intercalaires devant être chauffées de façon moindre se présentent devant des zones successives moins ou pas chauffantes.

Grâce à ce chauffage sélectif, on crée sur le corps de la préforme (ou du récipient intermédiaire) une ou des portions longitudinales relativement plus chaudes qui alternent avec des portions longitudinales intercalaires relativement moins chaudes et qui sont aptes à se déformer plus facilement que ces dernières au cours d'un processus de déformation ultérieur du corps de la préforme par exemple par soufflage ou étirage-soufflage. Ainsi les portions relativement plus chaudes peuvent s'étirer davantage que les portions relativement moins chaudes : si elles sont déplacées radialement d'une distance moindre que ces dernières par rapport à l'axe de la préforme, leur faculté accrue de déformation leur confère la possibilité d'un étirage circonférentiel plus important ; elles sont ainsi en mesure de fournir de la matière vers les portions relativement moins chaudes qui subissent, elles, un déplacement radial supérieur.

Grâce à cette répartition différentielle de la matière rendue possible par un chauffage sélectif ou différencié de différentes portions longitudinales du corps de la préforme, on obtient finalement un corps de récipient de forme complexe ayant une épaisseur de paroi approximativement constante en quelque endroit que ce soit, y compris dans les parties les plus éloignées de l'axe de la préforme initiale. Il en est de même si le récipient final est totalement asymétrique (goulot déporté latéralement par rapport au corps, présence d'une poignée de préhension). Il en est de même encore au niveau du fond du corps qui peut présenter une épaisseur approximativement constante aussi bien dans les parties les plus éloignées de l'axe de la préforme initiale que dans les parties qui en sont les plus proches.

L'épaisseur de la paroi du corps peut désormais être déterminée de façon précise en fonction de la résistance souhaitée et la suppression des surépaisseurs locales présentées par les récipients fabriqués jusqu'à présent conduit à une économie substantielle sur la quantité de matière nécessaire pour chaque récipient.

Le chauffage sélectif recherché peut être mené par différentes voies, soit au niveau de la préforme elle-même, soit au niveau des moyens de chauffage.

Pour ce qui est de réaliser un chauffage sélectif du corps de préforme par mise en oeuvre de moyens appropriés au niveau de la préforme elle-même, et se plaçant dans le cas pratique le plus courant d'une installation de traitement thermique au défilé dans un four, on peut notamment envisager l'une des solutions suivantes :
- faire défiler les préformes dans le four avec une vitesse de rotation des préformes sur elles-mêmes qui soit non uniforme de façon que certaines portions longitudinales soient exposées plus longtemps que d'autres aux rayonnements chauffants ; toutefois, là encore, la mise en oeuvre pratique semble complexe et coûteuse ;
- équiper chaque préforme, montée sur un support en rotation permanente sur lui-même, d'un masque approprié protégeant les portions longitudinales qui doivent être relativement les moins chauffées ; toutefois, cette solution paraît onéreuse (équipement avec un masque de chaque support de préforme sur toute la chaîne de transfert) et peu pratique (le chargement de la préforme sur le support risque d'être gêné par la présence du masque, obligation de changer tous les masques pour produire des récipients de formes et/ou de dimensions différentes).

Bien que la réalisation d'un chauffage sélectif par mise en oeuvre de moyens appropriés au niveau de la préforme elle-même puisse certes être envisagée dans certains cas particuliers, notamment grâce à l'une des solutions précitées, les difficultés et le coût de mise en oeuvre conduisent plutôt à envisager de réaliser la sélectivité du chauffage du corps de la préforme à partir de l'installation de chauffage elle-même, de manière à conserver les moyens traditionnels de transfert de la préforme avec rotation régulière de celle-ci sur elle-même, moyens qui par ailleurs sont fiables dans leur conception actuelle et donnent toute satisfaction. En outre, le maintien de la rotation de la préforme sur elle-même semble devoir s'imposer pour assurer le chauffage homogène du corps de préforme au moins au-dessus de la température de ramollissement du matériau thermoplastique, ce qui est indispensable pour que le processus ultérieur de formation du corps du récipient par soufflage ou étirage-soufflage puisse se dérouler de façon satisfaisante.

De façon simple, on fait avantageusement en sorte que la vitesse de déplacement de la préforme et la vitesse de rotation de la préforme sur elle-même sont approximativement constantes et que les zones chauffantes sont mutuellement écartées par des intervalles sensiblement constants.

De façon concrète, on peut prévoir que, depuis au moins un côté du four, on chauffe les corps des préformes de façon discontinue à partir de zones de chauffage successives écartées les unes des autres selon la trajectoire de déplacement de la préforme, qui constituent les susdites zones chauffantes. En particulier, sur au moins un côté du four, on prévoit plusieurs moyens de chauffage successifs écartés les uns des autres selon la trajectoire de déplacement de la préforme.

Toutefois, les moyens de chauffage sont constitués en pratique par des tubes rayonnants disponibles dans le commerce dans des longueurs standardisées qui peuvent ne pas correspondre aux longueurs de chauffage précisément souhaitées pour la mise en oeuvre du procédé. Devant la difficulté, voire l'impossibilité de disposer de tubes ayant la longueur souhaitée, il peut être plus avantageux d'avoir recours à une variante de mise en oeuvre selon laquelle, sur au moins un côté du four, on prévoit des moyens de chauffage continu et on dispose devant ceux-ci des caches successifs qui sont écartés les uns des autres selon la trajectoire de déplacement de la préforme.

Cependant, l'aménagement précité des moyens de chauffage, quelle que soit la variante à laquelle on a recours, risque de diminuer la puissance de chauffage d'ensemble du corps de préforme et/ou de conduire à un chauffage d'ensemble irrégulier rendant difficile le maintien d'une température homogène du corps au moins égale à la température de ramollissement du matériau thermoplastique.

On peut donc préférer obtenir la sélectivité recherchée du chauffage du corps par un aménagement d'une autre partie de l'installation de chauffage, savoir par un aménagement de moyens réflecteurs situés en regard des moyens de chauffage, de l'autre côté de la trajectoire suivie par les préformes. Comme cela a déjà été souligné plus haut, ces moyens réflecteurs sont d'emploi traditionnel dans les fours pour réfléchir vers les corps de préforme la fraction du rayonnement émis par les moyens de chauffage qui est passée entre les corps successifs, afin d'améliorer le rendement du four.

Ainsi, conformément à l'invention, on chauffe les corps des préformes depuis un côté du four et, depuis le côté opposé du four, on réfléchit le rayonnement thermique à partir de zones réfléchissantes successives écartées les unes des autres selon la trajectoire de déplacement de la préforme, qui constituent les susdites zones chauffantes. Il est alors possible, sur ledit côté opposé du four, soit de prévoir plusieurs réflecteurs successifs écartés les uns des autres selon la trajectoire de déplacement de la préforme, soit en variante de prévoir un réflecteur sensiblement continu et de disposer devant celui-ci des caches successifs non réfléchissants qui sont écartés les uns des autres selon la trajectoire de déplacement de la préforme, soit en variante encore de prévoir une paroi non réfléchissante sensiblement continue et de disposer devant celle-ci des réflecteurs successifs qui sont écartés les uns des autres selon la trajectoire de déplacement de la préforme.

Bien que la solution d'aménagement des moyens réflecteurs puisse éventuellement être combinée avec la solution d'aménagement des moyens de chauffage, il semble toutefois que sa mise en oeuvre seule permette d'aboutir à une souplesse d'exploitation optimale. En effet, alors que les moyens de chauffage maintenus dans leur configuration traditionnelle assurent la fourniture de l'énergie incidente pour le chauffage d'ensemble du corps, un aménagement approprié des seuls moyens réflecteurs procure la sélectivité de chauffage recherchée en surchauffant seulement les portions longitudinales requises du corps au-delà de la température procurée à titre principal par les moyens de chauffage. En outre, le recours à des réflecteurs discontinus placés devant une paroi continue non réfléchissante se révèle, sur le plan pratique, particulièrement intéressant, car plusieurs ou tous les réflecteurs peuvent être constitués à l'aide d'une simple plaque convenablement conformée en créneaux successifs et surtout facilement amovible et remplaçable, ce qui simplifie l'adaptation de l'installation pour la fabrication de récipients de types divers.

Dans un autre domaine d'application du procédé conforme à l'invention, on prévoit qu'en outre au moins une portion annulaire du corps de la préforme, ou plusieurs portions annulaires qui sont séparées longitudinalement les unes des autres, est portée à une température inférieure à celle du reste du corps.

Grâce à ce processus, on crée dans le corps de la préforme une ou des portions annulaires relativement moins chaudes qui alternent avec des portions annulaires relativement plus chaudes et qui sont aptes à se déformer moins facilement que ces dernières au cours d'une déformation ultérieure du corps de préforme. La présence d'au moins une portion annulaire relativement moins chaude, moins déformable, se traduit sur le corps du récipient final par une portion annulaire d'épaisseur supérieure à l'épaisseur du reste du corps et qui joue le rôle de zone périmétrique de renfort ou de bague de renfort.

Avantageusement, la mise en oeuvre du procédé s'effectuant en déplaçant la préforme, simultanément mise en rotation sur elle-même, à travers un four de chauffage, on chauffe le corps de la préforme depuis un côté du four et, depuis le côté opposé du four, on ne réfléchit pas le rayonnement thermique dans au moins une zone non réfléchissante en forme de bande s'étendant sensiblement parallèlement à la direction du déplacement de la préforme et située en regard d'au moins une portion annulaire du corps de préforme devant être relativement moins chaude, tandis qu'on réfléchit le rayonnement thermique dans au moins une zone réfléchissante en forme de bande s'étendant sensiblement parallèlement à la direction du déplacement de la préforme et située en regard du reste du corps de préforme devant être relativement plus chaud.

Il est souhaitable, pour éviter des effets secondaires indésirables, que les zones non réfléchissantes soient en outre absorbantes pour le rayonnement thermique incident.

L'invention propose également, selon un second de ses aspects, un four pour le traitement thermique du corps d'une préforme (ou d'un récipient intermédiaire) en matériau thermoplastique au cours d'un processus de fabrication d'un récipient, tel qu'un flacon ou une bouteille, notamment par un processus de soufflage ou d'étirage/soufflage, l'ensemble du corps de la préforme étant chauffé à une température supérieure à la température de ramollissement du matériau, qui, étant agencé conformément à l'invention, se caractérise essentiellement en ce qu'il comporte sur un côté au moins de la trajectoire suivie par la préforme déplacée tout en étant mise en rotation sur elle-même, une alternance de zones chauffantes et de zones moins ou pas chauffantes situées en regard d'au moins une partie de la longueur du corps de la préforme pour chauffer, à une température encore supérieure à celle du reste du corps de la préfrome, au moins une portion longitudinale du corps de la préforme, ou plusieurs portions longitudinales séparées circonférentiellement les unes des autres, qui s'étend sur au moins ladite partie de la longueur dudit corps, l'espacement des zones chauffantes étant déterminé en fonction du nombre des portions longitudinales du corps de préforme devant être chauffées préférentiellement et du périmètre du corps de la préforme, de manière telle que les portions longitudinales du corps de préforme à chauffer préférentiellement se présentent devant des zones chauffantes successives au cours des mouvements de déplacement et de rotation combinés de la préforme tandis que les portions longitudinales intercalaires devant être chauffées de façon moindre se présentent devant des zones successives moins ou pas chauffantes.

Avantageusement, la vitesse de déplacement de la préforme et la vitesse de rotation de la préforme sur elle-même étant approximativement constantes, les zones chauffantes sont mutuellement écartées par des intervalles sensiblement constants.

Selon un premier agencement général possible, le four comprend des moyens de chauffage discontinu situés sur au moins un côté du four qui déterminent les susdites zones chauffantes successives écartées les unes des autres selon la trajectoire de déplacement de la préforme. Dans ce cas, il est possible que les moyens de chauffage discontinu comprennent plusieurs organes de chauffage successifs écartés les uns des autres selon la trajectoire de déplacement de la préforme, ou bien encore, en variante, il est possible que les moyens de chauffage discontinu comprennent un organe de chauffage continu et des caches successifs qui sont disposés devant celui-ci et qui sont écartés les uns des autres selon la trajectoire de déplacement de la préforme.

Selon un second agencement général possible qui, en pratique, est préféré, le four comporte, sur un de ses côtés, au moins un organe de chauffage et, sur son côté opposé, des moyens de réflexion du rayonnement thermique incident agencés de manière à constituer des zones réfléchissantes successives, écartées les unes des autres selon la trajectoire de déplacement de la préforme, qui constituent les susdites zones chauffantes. Dans ce cas, il est possible que lesdits moyens de réflexion comportent, sur ledit côté opposé, plusieurs réflecteurs successifs écartés les uns des autres selon la trajectoire de déplacement de la préforme, ou bien encore, en variante, un réflecteur sensiblement continu et, disposés devant celui-ci, des caches successifs non réfléchissants qui sont écartés les uns des autres selon la trajectoire de déplacement de la préforme, ou bien encore, dans une variante préférée, une paroi sensiblement continue non réfléchissante et, disposés devant celle-ci, des réflecteurs successifs qui sont écartés les uns des autres selon la trajectoire de déplacement de la préforme.

Dans ce dernier cas, on peut envisager que plusieurs réflecteurs au moins sont réunis dans une même plaque conformée en créneaux successifs et assujettie, de façon amovible, devant ladite paroi non réfléchissante : on obtient alors un agencement simple et surtout facilement modifiable en fonction des types différents de récipients à fabriquer.

Il est souhaitable, notamment lorsque la paroi non réfléchissante est en outre absorbante pour la longueur d'onde du rayonnement thermique incident, que la paroi non réfléchissante soit refroidie afin d'éviter son échauffement de façon trop importante.

Dans un mode de réalisation procurant une souplesse d'exploitation, il est intéressant que la paroi non réfléchissante soit constituée sous forme modulaire de façon à pouvoir être aisément adaptée à des préformes de longueurs diverses et, à cet effet, on prévoit que la paroi non réfléchissante soit constituée par un empilement de barreaux dont la face tournée vers l'intérieur du four est noircie et qui sont avantageusement parcourus par un fluide de refroidissement.

Pour mettre en oeuvre le procédé de l'invention dans le deuxième domaine d'application précité, on prévoit plus particulièrement que le four comporte des moyens pour chauffer, à une température moindre que celle du reste du corps de la préforme, au moins une portion annulaire du corps de la préforme, ou plusieurs portions annulaires qui sont séparées longitudinalement les unes des autres.

Dans un mode de réalisation préféré, sur un côté de la trajectoire suivie par la préforme déplacée tout en étant mise en rotation sur elle-même, le four comporte des moyens de chauffage et, sur le côté opposé, il comporte au moins une zone non réfléchissante pour le rayonnement thermique, zone non réfléchissante qui est en forme de bande s'étendant sensiblement parallèlement à la direction du déplacement de la préforme et située en regard d'au moins une portion annulaire du corps de préforme devant être relativement moins chaude, et au moins une zone réfléchissante pour le rayonnement thermique, zone réfléchissante qui est en forme de bande s'étendant sensiblement parallèlement à la direction du déplacement de la préforme et située en regard du reste du corps de préforme devant être relativement plus chaud.

Pour éviter une réémission du rayonnement thermique avec décalage de sa longueur d'ondes qui pourrait perturber le fonctionnement correct du four, il est préférable que les zones ou parois non réfléchissantes soient en outre absorbantes pour le rayonnement thermique incident.

L'invention sera mieux comprise à la lecture de la description qui suit de certains modes de réalisation plus particulièrement envisagés et donnés uniquement à titre d'exemples nullement limitatifs. Dans cette description, on se réfère aux dessins annexés sur lesquels :
- la figure 1 est une vue schématique illustrant les formes obtenues au cours du déroulement d'un procédé à deux étapes successives de soufflage et/ou d'étirage-soufflage conformément à l'état de la technique ;
- la figure 2A est une vue en coupe, très schématique illustrant le principe général de chauffage du corps d'une préforme en matériau thermoplastique dans un four ;
- la figure 2B est une vue très schématique, en coupe transversale, illustrant les défauts présentés par un récipient obtenu à partir d'une préforme traitée thermiquement conformément à l'état de la technique ;
- les figures 3A et 3B sont des vues schématiques, respectivement en perspective et en coupe transversale, illustrant un premier domaine d'application du procédé de l'invention ;
- la figure 4 est une vue très schématique, en coupe transversale, illustrant les avantages présentés par un récipient obtenu à partir d'une préforme selon les fig. 3A et 3B traitée thermiquement conformément à l'invention ;
- les figures 5 à 9 sont des vues très schématiques de dessus montrant respectivement plusieurs agencements possibles de four conformément à l'invention pour obtenir le chauffage sélectif souhaité des corps de préformes ;
- les figures 10 et 11 sont des vues schématiques respectivement de dessus et de face en perspective d'encore un agencement possible de four conforme à l'invention ;
- la figure 12 est une vue schématique illustrant un autre domaine d'application du procédé de l'invention ; et
- la figure 13 est une vue schématique en perspective illustrant une mise en oeuvre préférée du procédé de la figure 12.

Les explications détaillées qui suivent, en référence aux figures annexées, sont plus particulièrement relatives au traitement d'une préforme, étant entendu toutefois que les dispositions exposées pourraient tout aussi bien être mises en oeuvre sur un récipient intermédiaire tel que le récipient intermédiaire 1₂ de la figure 1, comme déjà précisé.

Pour pallier les inconvénients présentés par un chauffage homogène du corps des préformes selon la technique traditionnelle, l'invention propose des moyens permettant, tout en faisant en sorte que l'ensemble du corps 2 de la préforme 1 soit chauffé à une température supérieure à la température de ramollissement du matériau thermoplastique, qu'au moins une portion du corps soit à température encore supérieure à celle du reste du corps (tout en faisant bien entendu en sorte que ne soit pas atteinte la température de cristallisation dudit matériau).

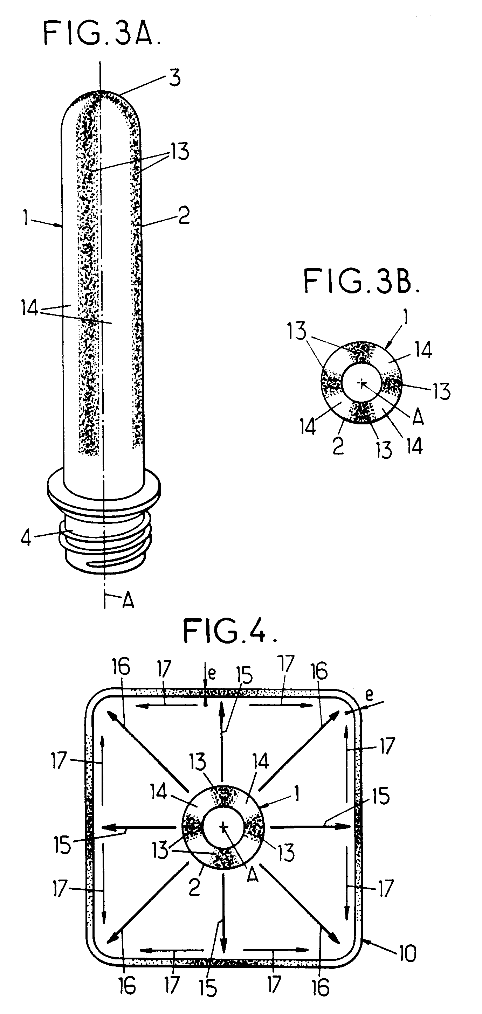

Il s'agit de chauffer à une température encore supérieure une portion longitudinale 13 (montrée en grisé sur les figures 3A et 3B pour faciliter la lecture des dessins), ou plusieurs portions longitudinales qui sont séparées circonférentiellement les unes des autres par des portions moins chaudes 14. Chaque portion longitudinale plus chaude 13 s'étend au moins sur une partie de la longueur du corps 2 et elle a une étendue circonférentielle en correspondance avec l'étendue périphérique et l'éloignement de l'axe A de la partie équivalente du corps achevé du récipient. Bien entendu, les portions plus chaudes et les portions moins chaudes ne présentent pas des limites nettes; il y a une variation progressive de la température entre les unes et les autres, ce qui est du reste parfaitement en concordance avec l'éloignement progressif de l'axe A des parties les plus éloignées du corps du récipient achevé.

Les portions longitudinales plus chaudes 13 sont aptes à se déformer plus facilement que les portions longitudinales moins chaudes 14 lorsque la préforme est ensuite déformée pour aboutir au corps du récipient, par exemple par déformation par soufflage ou étirage-soufflage dans un moule approprié.

Ainsi, au cours de cette déformation, les portions relativement plus chaudes 13 ont une faculté d'étirage accrue par comparaison avec les portions relativement moins chaudes 14 : si elles sont déplacées radialement d'une distance (flèches 15 sur la fig. 4) moindre que ces dernières (flèches 16) à partir de l'axe A de la préforme, leur plus grande facuté de déformation leur confère la possibilité d'un étirage périphérique plus important ; les portions les plus chaudes 13 sont ainsi en mesure de fournir de la matière (flèches 17) vers les portions relativement les moins chaudes subissant, elles, un déplacement radial supérieur.

Une telle répartition différentielle de la matière rendue possible par un chauffage différencié ou sélectif de diverses portions longitudinales du corps 2 de la préforme 1 réparties circonférentiellement permet d'aboutir finalement à un corps 10 de récipient définitif qui peut présenter une forme complexe (par exemple carrée comme montré à la fig. 3C, sur laquelle on a représenté ensemble, en coupe transversale, le corps de la préforme et le corps du récipient final) avec une épaisseur e de paroi approximativement constante en quelque endroit que ce soit, y compris dans les parties (angles du corps) les plus éloignées de l'axe A de la préforme initiale.

On comprend qu'un traitement thermique approprié du corps de la préforme permet de réaliser de la même manière un récipient final totalement asymétrique (par exemple avec le goulot déporté latéralement par rapport au corps, présence d'une poignée de préhension).

Bien entendu, ce processus de déformation différencié du matériau thermoplastique n'est pas réservé à la seule paroi latérale du corps, mais peut aussi intervenir pour la formation du fond du récipient. On élimine ainsi une cause de déformation ultérieure (rétreint différencié) apparaissant dans les fonds des récipients fabriqués traditionnellement lorsqu'ils sont soumis à des contraintes thermiques ou mécaniques.

On recueille ainsi l'avantage fondamental de pouvoir réaliser des récipients à paroi d'épaisseur approximativement constante en tout endroit du corps (c'est-à-dire l'épaule, le fond et la partie comprise entre ceux-ci), épaisseur qui peut être prédéterminée de façon minimale pour procurer la résistance mécanique souhaitée, et on élimine les surépaisseurs inutiles et coûteuses que présentaient, en certains endroits du corps, les récipients fabriqués traditionnellement. Le recours au procédé de l'invention entraîne donc des économies extrêmement importantes sur la quantité de matière première utilisée, et donc sur le coût de fabrication de récipients produits en très grandes séries.

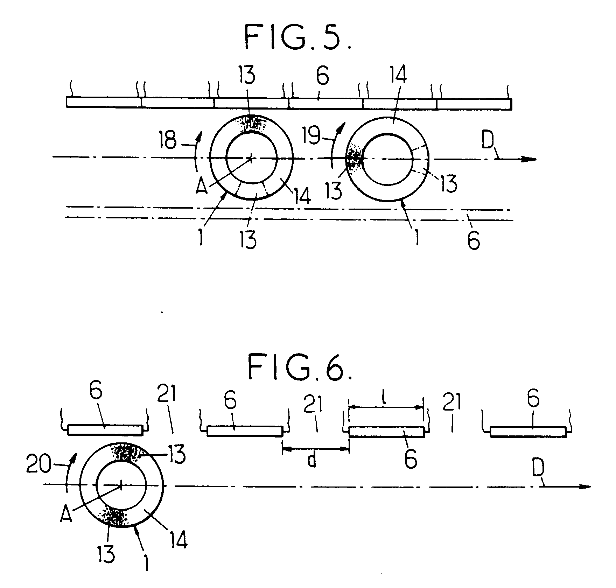

La mise en oeuvre du procédé qui vient d'être décrit, permettant de créer dans le corps de la préforme, des portions longitudinales 13 à température plus élevée peut être conduite de nombreuses façons, en se plaçant ab initio dans le cas pratique courant d'un traitement thermique effectué sur des préformes en déplacement au sein d'un four. Sur les figures 5 et suivantes qui illustrent les principales solutions techniques envisageables, seules ont été représentés les organes essentiels du four (savoir notamment les organes de chauffage et éventuellement les réflecteurs) qui sont nécessaires à la compréhension de l'invention.

Une première solution envisageable, schématisée en vue de dessus à la figure 5, consiste, en même temps que les préformes sont déplacées, à les faire tourner sur elles-mêmes avec une vitesse de rotation variable : la préforme tourne lentement (petite flèche 18 devant la préforme 1 située à gauche) lorsqu'une ou plusieurs portions longitudinales prédéterminées 13 passent devant les organes de chauffage 6, de sorte que cette ou ces portions 13 seront surchauffées, tandis que la préforme tourne plus rapidement (grande flèche 19 devant la préforme 2 située à droite) lorsqu'une ou plusieurs portions longitudinales 14, autres que la ou les portions 13 précitées, passent devant les organes de chauffage 6, de sorte que cette ou ces portions 14 seront moins chauffées. Si les portions surchauffées 13 sont en nombre pair et diamétralement opposées, des seconds organes de chauffage 6 peuvent être prévus sur le côté opposé du four.

Si cette solution présente l'avantage de permettre de créer des portions surchauffées 13 en nombre quelconque, elle présente par contre une insuffisance due à la nécessité d'une mise en rotation des préformes avec une vitesse rapidement variable, ce qui est complexe à réaliser techniquement, et donc coûteux, et ce qui exige, là encore, un réaménagement indésirable des installations actuelles.

En lieu et place des solutions précédentes qui s'attachaient à contrôler le mode de déplacement des préformes, il est possible, en conservant aux préformes leur mouvement combiné actuel de déplacement selon l'axe D et de rotation sur elles-mêmes (flèche 20 sur la figure 6 et suivantes), de contrôler de façon adéquate les moyens de chauffage.

Dans la solution représentée à la figure 6, les moyens de chauffage sont constitués par des organes de chauffage 6 situés d'un seul côté du four et répartis de façon discontinue parallèlement à la direction D de déplacement des préformes avec des intervalles mutuels 21 de façon telle que chaque préforme 1 en rotation présente toujours des portions longitudinales prédéterminées 13 devant les organes de chauffage successifs 6 et des portions longitudinales prédéterminées 14 devant les intervalles 21 séparant les organes de chauffage 6 successifs.

Le fonctionnement correct de l'installation nécessite de concilier la longueur l des organes de chauffage, la valeur d des intervalles séparant les organes de chauffage et le périmètre du corps des préformes. Or, les organes de chauffage sont en principe constitués par des colonnes de tubes de chauffage disposés parallèlement les uns au-dessus des autres (voir figure 1) ; les tubes couramment disponibles dans le commerce existent dans un nombre restreint de longueurs différentes, qui risquent de ne pas convenir pour réaliser la solution envisagée. Quant à faire fabriquer une série spéciale de tubes ayant la longueur souhaitée, il s'agirait d'une option beaucoup trop coûteuse.

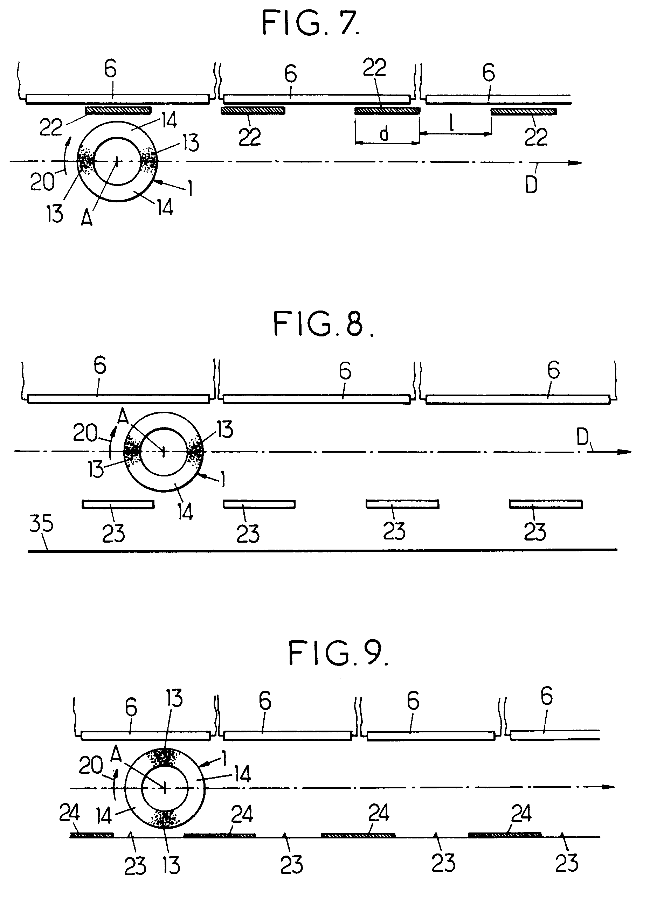

La solution représentée à la figure 7 permet d'éviter cet inconvénient. On maintient l'agencement traditionnel des organes de chauffage 6 disposés les uns à la suite des autres de façon continue et l'on dispose, devant les organes de chauffage, des masques 22 ayant une longueur d (correspondant à l'intervalle d de la figure 6) et écartés les uns des autres d'une distance l (correspondant à la longueur théorique l des organes de chauffage de la figure 6).

Cette solution semble toutefois devoir être, elle aussi, difficile à mettre en oeuvre ; en effet, les masques 22 (par exemple des plaques métalliques) sont placés à proximité immédiate des organes de chauffage 6 de forte puissance thermique et ils sont sujets à des déformations, voire même à une dégradation du matériau constitutif sous l'action de la chaleur. En outre, le chauffage de l'ensemble du corps de la préforme 1, qui doit être porté de façon homogène à une température supérieure à la température de ramollissement du matériau thermoplastique, ne se fait plus que de façon irrégulière et le chauffage homogène souhaité pour le corps devient problématique.

Les solutions représentées aux figures 8 à 10 permettent de surmonter ces difficultés. Dans ces solutions, les moyens de chauffage comprennent non seulement des organes de chauffage 6 disposés d'un côté du four, mais encore des moyens de réflexion (comme montré à la figure 1) disposés sur le côté opposé du four et aptes à réfléchir le rayonnement thermique passant entre les préformes consécutives en direction du centre du four, le rendement du four se trouvant ainsi notablement accru.

Ainsi, dans la solution générale représentée à la figure 8, on effectue la réflexion du rayonnement thermique de façon discontinue en des zones 23 disposées de sorte que seules des portions longitudinales 13 des corps de préforme 1 soient exposées de ce côté du four, tandis que sur le côté opposé du four les organes de chauffage 6 disposés de façon continue assurent le chauffage homogène requis pour ramollir le matériau thermoplastique de tout le corps. Une paroi non réfléchissante 35 peut, en variante, être disposée en arrière des zones 23, pour arrêter la propagation du rayonnement thermique passant au-delà des zones 23.

Un exemple pratique de réalisation pourrait consister à adjoindre, devant un réflecteur continu 9 souvent déjà présent dans le four (voir figure 1), des masques non réfléchissants (par exemple noirs) 24, placés les uns à la suite des autres de façon discontinue pour laisser apparaître le réflecteur 9 sous forme de fenêtres réfléchissantes 23 (fig. 9).

Toutefois, les masques non réfléchissants, absorbant tout ou partie du rayonnement thermique incident, s'échauffent et, se comportant comme un corps noir, réémettent vers les préformes un rayonnement à fréquence modifiée qui risque de perturber le processus de chauffage sélectif des corps des préformes. Pour éviter cet inconvénient, il conviendra donc de refroidir les masques 24.

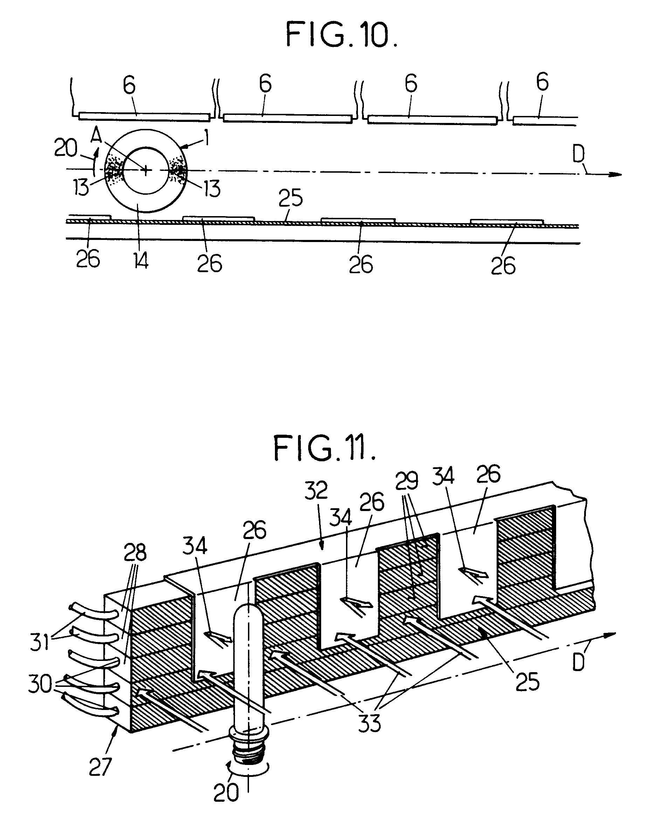

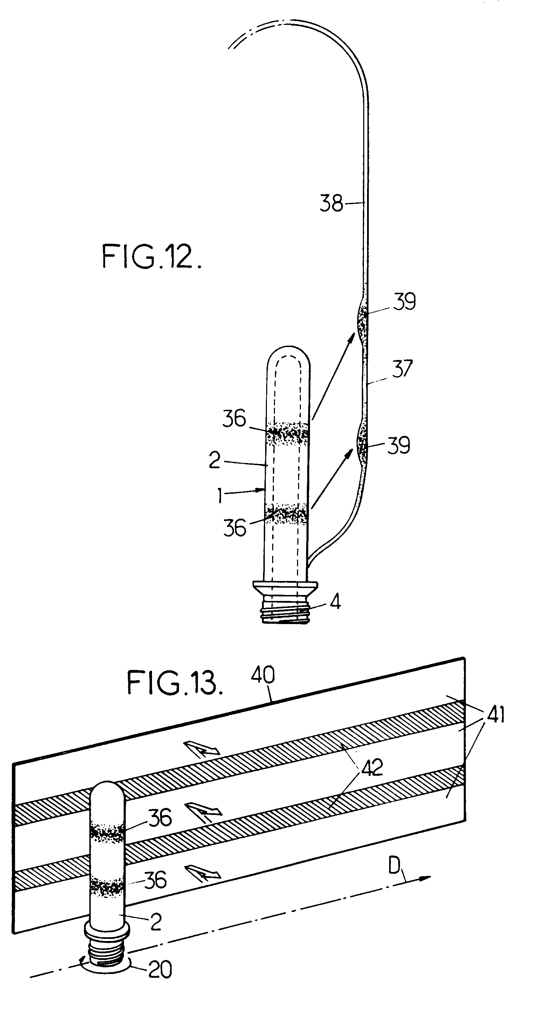

La solution technique représentée aux figures 10 et 11 permet de résoudre toutes les difficultés rencontrées avec les autres solutions passées en revue plus haut, y compris avec la solution de la figure 9. Toutes choses étant identiques par ailleurs, comme montré à la figure 10, on agence le côté du four opposé aux organes de chauffage 6 avec une surface 25 continue non réfléchissante et absorbante pour le rayonnement thermique incident (surface noire). Sur cette surface on rapporte des plaques réfléchissantes 26 disposées les unes à la suite des autres et écartées les unes des autres de manière telle que l'on obtienne le surchauffage sélectif souhaité de portions longitudinales prédéterminées 13 des corps des préformes.

En pratique, comme montré sur la figure 11 en perspective, on constitue une paroi modulaire 27 formée par un empilement de barreaux 28 présentant une face 29, tournée vers le centre du four, qui est noircie (face non réfléchissante et absorbante), l'ensemble des faces 29 constituant la surface 25 précitée. Les barreaux 28 sont munis d'un perçage longitudinal 30 raccordé, à ses extrémités, à un circuit 31 de circulation d'un fluide de refroidissement (par exemple de l'eau).

Les plaques réfléchissantes 26 peuvent faire partie intégrante d'une pièce métallique unique 32 découpée en créneaux. Sur la figure 11, le rayonnement thermique incident est schématisé par des flèches 33 et le rayonnement thermique réfléchi par les plaques 26 est schématisé par des flèches brisées 34.

Cet agencement, outre qu'il conduit à un fonctionnement fiable de l'installation, se révèle également d'une utilisation très souple et, par une modification du nombre des barreaux 28 et par un échange de la pièce 32, s'adapte rapidement et aisément à des modification des dimensions des préformes et du nombre de portions longitudinales surchauffées pour chaque corps de préforme.

En combinaison avec les dispositions qui précèdent, on peut en outre faire en sorte qu'au moins une portion annulaire 36 du corps 2 de la préforme 1, ou plusieurs portions annulaires 36 qui sont séparées longitudinalement les unes des autres, soit à une température inférieure à celle du reste du corps (tout en restant, là encore, supérieure à la température de ramollissement du matériau thermoplastique). Comme montré à la fig. 12, sur laquelle les portions annulaires 36 moins chaudes sont représentées en grisé, il en résulte, aux emplacements correspondants du corps 37 du récipient définitif 38 obtenu après déformation (soufflage ou étirage-soufflage), des zones périmétriques 39 qui possèdent une épaisseur sensiblement supérieure à l'épaisseur de la paroi du reste du corps.

La création de portions annulaires 36 de température inférieure à celle du reste du corps ne peut pas, en pratique, être obtenue de façon simple par une mise en place judicieuse des tubes de chauffage disposés sur un côté du four en raison de la propagation non directive du rayonnement thermique et du chevauchement des rayonnements en provenance de deux tubes voisins. De ce fait, il est intéressant, pour parvenir au but recherché, de mettre en oeuvre, ici encore, les variations de chauffage du corps introduites par des zones réfléchissantes et non réfléchissantes convenablement disposées en regard du corps des préformes en mouvement.

A cette fin, comme montré à la fig. 13, on dispose, en regard des moyens de chauffage (non visibles sur la fig. 13), un panneau 40 (ou un ensemble de panneaux ou analogue) dont la face tournée vers l'intérieur du four est divisée, verticalement, en une alternance de bandes horizontales soit réfléchissantes 41 en regard des zones du corps 2 des préformes devant être relativement plus chaudes, soit non réfléchissantes 42 en regard des zones 36 du corps 2 des préformes devant être relativement moins chaudes.

Les zones non réfléchissantes sont de préférence absorbantes pour le rayonnement thermique incident, de manière à éviter les réémissions.

La combinaison des chauffages de portions longitudinales et annulaires du corps de préforme peut permettre la fabrication de récipients de formes particulièrement complexes (notamment asymétriques) ayant des parois d'épaisseur relativement constantes sauf en une ou plusieurs zones périmétriques plus épaisses qui jouent le rôle de renforts mécaniques facilitant la préhension du récipient.

On comprendra en outre qu'un procédé incluant plusieurs étapes successives de soufflage et/ou d'étiragesoufflage se prête particulièrement bien à de nombreuses possibilités de traitement de portions longitudinales et/ou annulaires de la préforme et/ou du ou des récipients intermédiaires. En effet, une combinaison de chauffage de portions longitudinales et annulaires peut être effectuée :
- sur la préforme seulement (comme expliqué plus haut),
- sur un récipient intermédiaire seulement,
- sur la préforme et sur un récipient intermédiaire.

Il est également possible d'effectuer le chauffage de portions longitudinales sur la préforme seule et le chauffage de portions annulaires sur un récipient intermédiaire seul (ou inversement).

De même, si une combinaison de traitements thermiques n'est pas souhaitée, on peut réaliser un chauffage de portions longitudinales (ou annulaires) sur la préforme seule ou sur un récipient intermédiaire seul ; ou bien encore on peut réaliser un chauffage de portions longitudinales (ou annulaires) sur la préforme, puis à nouveau sur un récipient intermédiaire.

Le procédé conforme à l'invention se prête donc à une très grande souplesse de mise en oeuvre.

Comme il va de soi et comme il résulte déjà de ce qui précède, l'invention ne se limite nullement à ceux de ses modes d'application et de réalisation qui ont été plus particulièrement envisagés ; elle en embrasse, au contraire toutes les variantes.

## Revendications

1. Procédé de traitement thermique du corps (2) d'une préforme (1) ou d'un récipient intermédiaire en matériau thermoplastique au cours d'un processus de fabrication d'un récipient (1₃), tel qu'un flacon ou une bouteille, notamment par soufflage ou étirage-soufflage, traitement thermique au cours duquel la préforme, tout en étant mise en rotation sur elle-même, est déplacée à travers un four de chauffage (5) pour que l'ensemble du corps (2) de la préforme (1) soit chauffé à une température supérieure à la température de ramollissement du matériau, caractérisé en ce qu'au moins une partie de la longueur du corps (2) de la préforme (1) en rotation sur elle-même (18, 20) est amenée à passer alternativement devant des zones chauffantes (6, 26) et des zones moins ou pas chauffantes (21, 25) situées au moins d'un côté de la trajectoire (D) suivie dans le four (5) par la préforme (1) pour qu'au moins une portion longitudinale (13) du corps de la préforme, ou plusieurs portions longitudinales séparées circonférentiellement les unes des autres, qui s'étend sur au moins ladite partie de la longueur du corps soit portée à une température encore supérieure à celle du reste du corps, l'espacement (d) des zones chauffantes étant déterminé en fonction du nombre des portions longitudinales (13) du corps de préforme devant être chauffées préférentiellement et du périmètre du corps (2) de la préforme, de manière telle que les portions longitudinales (13) du corps de préforme à chauffer préférentiellement se présentent devant des zones chauffantes successives (6, 26) au cours des mouvements de déplacement et de rotation combinés de la préforme tandis que les portions longitudinales intercalaires (14) devant être chauffées de façon moindre se présentent devant des zones successives moins ou pas chauffantes (21, 25),
ce grâce à quoi on crée dans le corps (2) de la préforme (1) ou du récipient intermédiaire une ou des portions longitudinales (13) relativement plus chaudes qui alternent avec des portions longitudinales intercalaires (14) relativement moins chaudes et qui sont aptes à se déformer plus facilement que ces dernières au cours d'une déformation ultérieure du corps de la préforme, ce qui permet de fabriquer des récipients ayant un corps de forme complexe (non cylindrique de révolution) présentant partout une épaisseur de paroi (e) approximativement constante.

2. Procédé selon la revendication 1, caractérisé en ce que la vitesse de déplacement de la préforme (1) et la vitesse de rotation de la préforme sur elle-même sont approximativement constantes et en ce que les zones chauffantes (6, 26) sont mutuellement écartées par des intervalles (d) sensiblement constants.

3. Procédé selon la revendication 1 ou 2, caractérisé en ce que, depuis au moins un côté du four (5), on chauffe les corps des préformes de façon discontinue à partir de zones de chauffage successives (6) écartées les unes des autres selon la trajectoire (D)de déplacement de la préforme, qui constituent les susdites zones chauffantes.

4. Procédé selon la revendication 3, caractérisé en ce que, sur au moins un côté du four, on prévoit plusieurs moyens de chauffage successifs (6) écartés les uns des autres selon la trajectoire de déplacement de la préforme.

5. Procédé selon la revendication 4, caractérisé en ce que, sur au moins un côté du four, on prévoit des moyens de chauffage continu et on dispose devant ceux-ci des caches successifs qui sont écartés les uns des autres selon la trajectoire de déplacement de la préforme.

6. Procédé selon l'une quelconque des revendications 1 à 5, caractérisé en ce qu'on chauffe (6) le corps de la préforme depuis un côté du four et en ce que, depuis le côté opposé du four, on réfléchit le rayonnement thermique dans des zones réfléchissantes successives (26), écartées les unes des autres selon la trajectoire (D) de déplacement de la préforme, qui constituent les susdites zones chauffantes.

7. Procédé selon la revendication 6, caractérisé en ce que, sur ledit côté opposé du four, on prévoit plusieurs réflecteurs successifs (26) écartés les uns des autres selon la trajectoire de déplacement de la préforme.

8. Procédé selon la revendication 6, caractérisé en ce que, sur ledit côté opposé du four, on prévoit un réflecteur sensiblement continu et on dispose devant celui-ci des caches successifs non réfléchissants qui sont écartés les uns des autres selon la trajectoire de déplacement de la préforme.

9. Procédé selon la revendication 6, caractérisé en ce que, sur ledit côté opposé du four, on prévoit une paroi sensiblement continue non réfléchissante (25) et on dispose devant celle-ci des réflecteurs successifs (26) qui sont écartés les uns des autres selon la trajectoire de déplacement de la préforme.

10. Procédé selon la revendication 1, caractérisé en ce que au moins une portion annulaire (36) du corps (2) de la préforme ou d'un récipient intermédiaire, ou plusieurs portions annulaires qui sont séparées longitudinalement les unes des autres, est portée à une température inférieure à celle du reste du corps,
ce grâce à quoi on crée, dans le corps de la préforme ou du récipient intermédiaire, une ou des portions annulaires (36) relativement moins chaudes qui alternent avec des portions annulaires relativement plus chaudes et qui sont aptes à se déformer moins facilement que ces dernières au cours d'une déformation ultérieure du corps de la préforme, ce qui permet de fabriquer des récipients ayant un corps présentant au moins une zone périmétrique de renfort (39) ayant une épaisseur accrue.

11. Procédé selon la revendication 10, pour la mise en oeuvre duquel la préforme, tout en étant mise en rotation sur elle-même (20), est déplacée (D) à travers un four de chauffage, caractérisé en ce qu'on chauffe le corps de la préforme depuis un côté du four, et en ce que, depuis le côté opposé du four, on ne réfléchit pas le rayonnement thermique dans au moins une zone non réfléchissante en forme de bande (42) s'étendant sensiblement parallèlement à la direction du déplacement (D) de la préforme et située en regard d'au moins une portion annulaire (36) du corps (2) de préforme devant être relativement moins chaude, tandis qu'on réfléchit le rayonnement thermique dans au moins une zone réfléchissante en forme de bande (41) s'étendant sensiblement parallèlement à la direction du déplacement de la préforme et située en regard du reste du corps de préforme devant être relativement plus chaude.

12. Procédé selon l'une quelconque des revendications 6, 7, 8, 9, 11, caractérisé en ce que les zones non réfléchissantes sont en outre absorbantes pour le rayonnement thermique incident.

13. Procédé de fabrication d'un récipient, tel qu'un flacon ou une bouteille, à partir d'une préforme ou d'un récipient intermédiaire en matériau thermoplastique, caractérisé en ce qu'il comprend au moins une étape de traitement thermique du corps de la préforme et/ou d'un récipient intermédiaire selon l'une quelconque des revendications 1 à 12.

14. Four pour le traitement thermique du corps (2) d'une préforme (1) ou d'un récipient intermédiaire en matériau thermoplastique au cours d'un processus de fabrication d'un récipient (1₃), tel qu'un flacon ou une bouteille, notamment par un processus de soufflage ou d'étirage-soufflage, l'ensemble du corps (2) de la préforme étant chauffé à une température supérieure à la température de ramollissement du matériau,
caractérisé en ce qu'il comporte, sur un côté au moins de la trajectoire (D) suivie par la préforme déplacée tout en étant mise en rotation sur elle-même (18, 20), une alternance de zones chauffantes (6, 26) et de zones moins ou pas chauffantes (21, 25) situées en regard d'au moins une partie de la longueur du corps de la préforme pour chauffer, à une température encore supérieure à celle du reste du corps de la préforme, au moins une portion longitudinale (13) du corps (2) de la préforme, ou plusieurs portions longitudinales (13) séparées circonférentiellement les unes des autres, qui s'étend sur au moins ladite partie de la longueur dudit corps, l'espacement (d) des zones chauffantes (6, 26) étant déterminé en fonction du nombre des portions longitudinales du corps de préforme devant être chauffées préférentiellement et du périmètre du corps de la préforme, de manière telle que les portions longitudinales (13) du corps de préforme à chauffer préférentiellement se présentent devant des zones chauffantes successives (6, 26) au cours des mouvements de déplacement et de rotation combinés de la préforme tandis que les portions longitudinales intercalaires (14) devant être chauffées de façon moindre se présentent devant des zones successives moins ou pas chauffantes (21, 25).

15. Four selon la revendication 14, caractérisé en ce que, la vitesse de déplacement de la préforme (1) et la vitesse de rotation de la préforme sur elle-même étant approximativement constantes, les zones chauffantes (6, 26) sont mutuellement écartées par des intervalles (d) sensiblement constants.

16. Four selon la revendication 14 ou 15, caractérisé en ce qu'il comprend des moyens de chauffage discontinu (6) situés sur au moins un côté du four qui déterminent les susdites zones chauffantes successives écartées les unes des autres selon la trajectoire (D) de déplacement de la préforme (1).

17. Four selon la revendication 16, caractérisé en ce que les moyens de chauffage discontinu comprennent plusieurs organes de chauffage successifs (6) écartés les uns des autres selon la trajectoire (D) de déplacement de la préforme (1).

18. Four selon la revendication 16, caractérisé en ce que les moyens de chauffage discontinu comprennent un organe de chauffage continu (6) et des caches successifs qui sont disposés devant celui-ci et qui sont écartés les uns des autres selon la trajectoire de déplacement de la préforme.

19. Four selon l'une quelconque des revendications 14 à 18, caractérisé en ce qu'il comporte, sur un de ses côtés, au moins un organe de chauffage (6) et en ce qu'il comporte, sur son côté opposé, des moyens (26) de réflexion du rayonnement thermique incident agencés de manière à constituer des zones réfléchissantes successives, écartées les unes des autres selon la trajectoire de déplacement de la préforme, qui constituent les susdites zones chauffantes.

20. Four selon la revendication 19, caractérisé en ce que lesdits moyens de réflexion comportent, sur ledit côté opposé, plusieurs réflecteurs successifs (26) écartés les uns des autres selon la trajectoire (D) de déplacement de la préforme (1).

21. Four selon la revendication 19, caractérisé en ce que lesdits moyens de réflexion comportent, sur ledit côté opposé, un réflecteur sensiblement continu et, disposés devant celui-ci, des caches successifs non réfléchissants qui sont écartés les uns des autres selon la trajectoire de déplacement de la préforme.

22. Four selon la revendication 19, caractérisé en ce que lesdits moyens de réflexion comportent, sur ledit côté opposé, une paroi sensiblement continue non réfléchissante (25) et, disposés devant celle-ci, des réflecteurs successifs (26) qui sont écartés les uns des autres selon la trajectoire (D) de déplacement de la préforme (1).

23. Four selon la revendication 22, caractérisé en ce que plusieurs réflecteurs (26) au moins sont réunis dans une même plaque (32) conformée en créneaux successifs et assujettie, de façon amovible, devant ladite paroi non réfléchissante (25).

24. Four selon la revendication 22 ou 23, caractérisé en ce que la paroi non réfléchissante est refroidie.

25. Four selon l'une quelconque des revendications 22 à 24, caractérisé en ce que la paroi non réfléchissante est constituée par un empilement de barreaux (28) dont la face tournée vers l'intérieur du four est noircie et qui sont avantageusement parcourus (30, 31) par un fluide de refroidissement.

26. Four selon la revendication 14, caractérisé en ce qu'il comporte des moyens pour chauffer, à une température moindre que celle du reste du corps de la préforme, au moins une portion annulaire (36) du corps (2) de la préforme (1), ou plusieurs portions annulaires (36) qui sont séparées longitudinalement les unes des autres.

27. Four selon la revendication 26, caractérisé en ce que, sur un côté de la trajectoire (D) suivie par la préforme (1) déplacée tout en étant mise en rotation sur elle-même (20), il comporte des moyens de chauffage et en ce que, sur le côté opposé, il comporte au moins une zone (42) non réfléchissante pour le rayonnement thermique, zone non réfléchissante qui est en forme de bande s'étendant sensiblement parallèlement à la direction du déplacement de la préforme et située en regard d'au moins une portion annulaire (36) du corps (2) de préforme devant être relativement moins chaude, et au moins une zone (41) réfléchissante pour le rayonnement thermique, zone réfléchissante (41) qui est en forme de bande s'étendant sensiblement parallèlement à la direction du déplacement de la préforme et située en regard du reste du corps de préforme devant être relativement plus chaud.

28. Four selon l'une quelconque des revendications 19, 20, 21, 22, 23, 24, 25, 27, caractérisé en ce que les zones ou parois non réfléchissantes (42) sont en outre absorbantes pour le rayonnement thermique incident.

29. Installation de fabrication d'un récipient, tel qu'un flacon ou une bouteille, à partir d'une préforme ou d'un récipient intermédiaire en matériau thermoplastique, caractérisé en ce qu'il comprend au moins un four de traitement thermique du corps de la préforme ou du récipient intermédiaire selon l'une quelconque des revendications 14 à 28.

## Claims

1. Process for the heat treatment of the body (2) of a preform (1) or of an intermediate container made of a thermoplastic material during the course of a fabrication process for a container (1₃), such as a flask or bottle, notably by blow-moulding or drawing and blow-moulding, a heat treatment during the course of which the preform is rotated about itself and moved through a heating oven (5) such that the whole body (2) of the preform (1) is heated to a temperature above the softening temperature of the material,
characterized in that at least part of the length of the body (2) of the preform (1) rotating about itself (18, 20) is caused to pass alternately in front of heating zones (6, 26) and zones of lesser or no heating (21, 25) situated at least to one side of the displacement path (D) of the preform (1) through the heating oven (5), such that at least one longitudinal portion (13) of the preform body, or several longitudinal portions circumferentially separated from one another, extending over at least the said part of the length of the body, is raised to a temperature even higher than that of the rest of the body, the spacing (d) of the heating zones being determined as a function of the longitudinal portions (13) of the preform body that have to be heated preferentially and of the perimeter of the body (2) of the preform, such that the longitudinal portions (13) of the preform body to be heated preferentially come before the successive heating zones (6, 26) during the combined displacement and rotation movement of the preform while the longitudinal portions between them (14) that have to be heated less come before the successive zones of lesser or no heating (21, 25), thanks to which there are created in the body (2) of the preform (1) or the intermediate container one or more longitudinal portions (13) which are relatively hotter, alternating with intermediate longitudinal portions (14) which are relatively less hot, the former being able to deform more easily than the latter during the subsequent deformation of the preform body, this making it possible to fabricate containers of complex body shape (not rotationally cylindrical) with a wall thickness (e) which is approximately the same all over.

2. Process according to Claim 1, characterized in that the displacement speed of the preform (1) and its speed of rotation about itself are approximately constant, and in that the heating zones (6, 26) are spaced apart at essentially fixed intervals (d).

3. Process according to Claim 1 or 2, characterized in that from at least one side of the oven (5), the preform bodies are heated discontinuously by successive heating zones (6) spaced apart along the displacement path (D) of the preform, which constitute the aforesaid heating zones.

4. Process according to Claim 3, characterized in that on at least one side of the oven are provided several successive means of heating (6) spaced apart along the displacement path of the preform.

5. Process according to Claim 4, characterized in that on at least one side of the oven there are continuous means of heating, in front of which are successive screens spaced apart along the displacement path of the preform.

6. Process according to any of Claims 1 to 5, characterized in that the preform body is heated (6) from one side of the oven, and in that from the opposite side of the oven the heat radiation is reflected in successive reflecting zones (26) spaced apart along the displacement path (D) of the preform, which constitute the aforementioned heating zones.

7. Process according to Claim 6, characterized in that on the said opposite side of the oven several successive reflectors (26) are provided, spaced apart along the displacement path of the preform.

8. Process according to Claim 6, characterized in that on the said opposite side of the oven an essentially continuous reflector is provided and in front of it there are successive non-reflecting screens spaced apart along the displacement path of the preform.

9. Process according to Claim 6, characterized in that on the said opposite side of the oven an essentially continuous non-reflecting wall (25) is provided and in front of it there are successive reflectors (26) spaced apart along the displacement path of the preform.

10. Process according to Claim 1, characterized in that at least one annular portion (36) of the body (2) of the preform or intermediate container, or several annular portions spaced longitudinally apart from one another, is raised to a temperature lower than that of the remainder of the body, thanks to which in the body of the preform or intermediate container there are one or more annular portions (36) relatively less hot, alternating with relatively hotter annular portions, the former being able to deform less easily than the latter during a subsequent deformation of the preform body, which makes it possible to fabricate containers whose body has at least one circumferential reinforcement zone (39) of increased thickness.

11. Process according to Claim 10, which is put into operation by setting the preform into rotation about itself (20) and displacing it (D) through a heating oven, characterized in that the body of the preform is heated from one side of the oven, and in that from the opposite side of the oven the heat radiation is not reflected by at least one non-reflecting zone in the form of a strip (42) extending essentially parallel to the displacement direction (D) of the preform and situated opposite at least one annular portion (36) of the body (2) of the preform which must be relatively less hot, whereas the heat radiation is reflected by at least one reflecting zone in the form of a strip (41) extending essentially parallel to the displacement direction of the preform and situated opposite the remainder of the preform body which must be relatively hotter.

12. Process according to any of Claims 6, 7, 8, 9, 11, characterized in that the non-reflective zones are also capable of absorbing the incident heat radiation.

13. Process for the fabrication of a container such as a flask or bottle from a preform or intermediate container made of a thermoplastic material, characterized in that it comprises at least one heat treatment stage of the preform and/or intermediate container in accordance with any of Claims 1 to 12.

14. Oven for the heat treatment of the body (2) of a preform (1) or intermediate container made of a thermoplastic material during the course of a process for the fabrication of a container (1₃), such as a flask or bottle, notably by blow-moulding or drawing and blow-moulding, the entire body (2) of the preform being heated to a temperature higher than the softening temperature of the material, characterized in that it comprises, on at least one side of the path (D) followed by the preform moving through it and rotating about itself (18, 20), an alternation of heating zones (6, 26) and zones of lesser or no heating (21, 25) situated opposite at least part of the length of the preform body, such as to heat to a temperature even higher than that of the rest of the preform body at least one longitudinal portion (13) of the preform body (2), or several longitudinal portions (13) spaced circumferentially apart from one another, which extends over at least the said part of the length of the said body, the spacing (d) of the heating zones (6, 26) being determined as a function of the number of longitudinal portions of the preform body that are to be heated preferentially and of the perimeter of the preform body, such that the longitudinal portions (13) of the preform body to be heated preferentially will pass before successive heating zones (6, 26) during the combined displacement and rotary movements of the preform while the intermediate longitudinal portions (14) that are to be heated less, will pass before successive zones (21, 25) of lesser or no heating.

15. Oven according to Claim 14, characterized in that the displacement speed of the preform (1) and its speed of rotation about itself are approximately constant, and the heating zones (6, 26) are spaced apart at essentially fixed intervals (d).

16. Oven according to Claims 14 or 15, characterized in that it comprises discontinuous means of heating (6) situated on at least one side, which determine the aforesaid successive heating zones spaced apart along the displacement path (D) of the preform (1).

17. Oven according to Claim 16, characterized in that the discontinuous means of heating comprise several successive heaters (6) spaced apart along the displacement path (D) of the preform (1).

18. Oven according to Claim 16, characterized in that the discontinuous means of heating comprise a continuous heater (6) with successive screens in front of it spaced apart along the displacement path of the preform.

19. Oven according to any of Claims 14 to 18, characterized in that it comprises on one side at least one heater (6), and in that on its opposite side it comprises means (26) for the reflection of incident heat radiation arranged so as to constitute successive reflecting zones, spaced apart along the displacement path of the preform, which constitute the aforesaid heating zones.

20. Oven according to Claim 19, characterized in that the said means of reflection on the said opposite side comprise several successive reflectors (26) spaced apart along the displacement path (D) of the preform (1).

21. Oven according to Claim 19, characterized in that the said means of reflection on the said opposite side comprise an essentially continuous reflector in front of which are arranged successive non-reflecting screens spaced apart along the displacement path of the preform.

22. Oven according to Claim 19, characterized in that the said means of reflection on the said opposite side comprise an essentially continuous non-reflecting wall (25), in front of which are arranged successive reflectors (26) spaced apart along the displacement path (D) of the preform (1).

23. Oven according to Claim 22, characterized in that several reflectors (26) at least are combined in a single plate (32) shaped to form successive crenellations and supported movably in front of the said non-reflecting wall (25).

24. Oven according to Claims 22 or 23, characterized in that the non-reflecting wall is cooled.

25. Oven according to any of Claims 22 to 24, characterized in that the non-reflecting wall is a stack of bars (28) whose side facing the inside of the oven is blackened and which are advantageously percolated by a coolant (30, 31).

26. Oven according to Claim 14, characterized in that it comprises means of heating to a temperature lower than that of the rest of the preform body at least one annular portion (36) of the body (2) of the preform (1), or several annular portions (36) spaced longitudinally apart from one another.

27. Oven according to Claim 26, characterized in that on one side of the path (D) followed by the preform (1) moving along while being rotated about itself (20), it comprises means of heating, and in that on the opposite side it comprises at least one zone (42) which is non-reflective to heat radiation, the said non-reflective zone being in the form of a strip extending essentially parallel to the displacement direction of the preform and situated opposite at least one annular portion (36) of the preform body (2) which must be relatively less hot, and at least one zone (41) which is reflective to heat radiation, the said reflective zone (41) being in the form of a strip extending essentially parallel to the displacement direction of the preform and situated opposite the remainder of the preform body which must be relatively hotter.

28. Oven according to any of Claims 19 to 25 or 27, characterized in that the non-reflecting zones or walls (42) are also capable of absorbing incident heat radiation.

29. Installation for the fabrication of a container such as a flask or bottle from a preform or intermediate container made of a thermoplastic material, characterized in that it comprises at least one oven for the heat treatment of the body of the preform or intermediate container in accordance with any of Claims 14 to 28.

## Patentansprüche

1. Verfahren für eine thermische Behandlung von Körpern (2) eines Vorformlings (1) oder eines Zwischenbehälters aus thermoplastischem Material im Verlauf eines Herstellungsprozesses für einen Behälter (1₃), wie einen Kolben oder eine Flasche, insbesondere durch Blasformung oder Streck-Blasformung, eine thermische Behandlung, im Verlauf derer der jeweils in Drehung um sich selbst versetzte Vorformling durch einen Heizofen (5) hindurch verlagert wird, damit die Gesamtheit des Körpers (2) des Vorformlings (1) auf eine höhere Temperatur als der Erweichungstemperatur des Materials erwärmt wird, dadurch gekennzeichnet, daß wenigstens ein Teil der Länge des Körpers (2) des in Drehung um sich selbst (18, 20) versetzten Vorformlings (1) so zugeführt wird, daß dieser sich abwechselnd vor den heizenden Zonen (6, 26) und den weniger oder nicht-heizenden Zonen (21, 25) vorbeibewegt, die wenigstens an einer Seite der Bewegungsbahn (D) angeordnet sind, der der Vorformling (1) im Ofen (5) folgt, damit wenigstens ein Längsbereich (13) des Körpers des Vorformlings, oder mehrere umfangsmäßig voneinander getrennte Bereiche, der sich über wenigstens diesen Teil der Länge des Körpers erstreckt, auf eine noch höhere Temperatur als der des Restes des Körpers gebracht wird, wobei der Abstand (d) der heizenden Zonen in Abhängigkeit von der Anzahl an Längsbereichen (13) des Vorformlingskörpers, die vorzugsweise erwärmt werden sollen, und des Umfangs des Körpers (2) des Vorformlings bestimmt wird, derart, daß sich die vorzugsweise zu erwärmenden Längsbereiche (13) des Vorformlings im Verlauf der kombinierten Verlagerungs- und Drehbewegungen des Vorformlings vor den aufeinanderfolgenden heizenden Zonen (6, 26) befinden, wohingegen sich die zwischenliegenden Längsbereiche (14), die in geringerer Weise erwärmt werden sollen, vor den aufeinanderfolgenden weniger oder nicht-heizenden Zonen (21, 25) befinden,
aufgrund dessen werden in dem Körper (2) des Vorformlings (1) oder des Zwischenbehälters ein oder mehrere relativ wärmere Längsbereiche (13) erzeugt, die sich mit den relativ weniger warmen, dazwischenliegenden Längsbereichen (14) abwechseln und die so ausgebildet sind, daß sie sich im Verlauf einer späteren Verformung des Körpers des Vorformlings leichter verformen als die letzteren, wobei dies gestattet, Behälter mit einem Körper von komplexer Form (nicht-zylindrischer Umlauf) zu erzeugen, der überall eine in etwa konstante Wandstärke (e) aufweist.

2. Verfahren nach Anspruch 1, dadurch gekennzeichnet, daß die Verlagerungsgeschwindigkeit des Vorformlings (1) und die Drehgeschwindigkeit des Vorformlings um sich selbst in etwa konstant sind und daß die heizenden Zonen (6, 26) in im wesentlichen konstanten Intervallen (d) voneinander abgerückt sind.

3. Verfahren nach Anspruch 1 oder 2, dadurch gekennzeichnet, daß die Körper der Vorformlinge von wenigstens einer Seite des Ofens (5) aus in diskontinuierlicher Weise mittels der entlang der Bewegungsbahn (D) des Vorformlings voneinander in Abstand liegenden, aufeinanderfolgenden Heizzonen (6) erwärmt werden, die die oben genannten heizenden Zonen bilden.

4. Verfahren nach Anspruch 3, dadurch gekennzeichnet, daß auf wenigstens einer Seite des Ofens mehrere aufeinanderfolgende Heizmittel (6) vorgesehen werden, die entlang der Verlagerungsbahn des Vorformlings in Abstand zueinander liegen.

5. Verfahren nach Anspruch 4, dadurch gekennzeichnet, daß auf wenigstens einer Seite des Ofens durchgehende Heizmittel vorgesehen werden und vor diesen aufeinanderfolgende Abdeckungen angeordnet werden, die entlang der Verlagerungsbahn des Vorformlings zueinander in Abstand liegen.

6. Verfahren nach einem der Ansprüche 1 bis 5, dadurch gekennzeichnet, daß der Körper des Vorformlings von einer Seite des Ofens aus erwärmt (6) wird und daß von der gegenüberliegenden Seite des Ofens aus die Wärmestrahlung in aufeinanderfolgenden, reflektierenden Zonen (26) reflektiert wird, die entlang der Verlagerungsbahn (D) des Vorformlings in Abstand zueinander liegen, welche die oben genannten heizenden Zonen bilden.

7. Verfahren nach Anspruch 6, dadurch gekennzeichnet, daß auf der besagten entgegengesetzten Seite des Ofens mehrere aufeinanderfolgende Reflektoren (26) vorgesehen werden, die entlang der Verlagerungsbahn des Vorformlings zueinander in Abstand liegen.

8. Verfahren nach Anspruch 6, dadurch gekennzeichnet, daß auf der besagten entgegengesetzten Seite des Ofens ein im wesentlichen durchgehender Reflektor vorgesehen wird und vor diesem aufeinanderfolgende, nicht-reflektierende Abdeckungen angeordnet werden, die entlang der Verlagerungsbahn des Vorformlings in Abstand zueinander liegen.

9. Verfahren nach Anspruch 6, dadurch gekennzeichnet, daß auf der besagten entgegengesetzten Seite des Ofens eine im wesentlichen durchgehende, nicht-reflektierende Wand (25) vorgesehen wird und vor dieser aufeinanderfolgende Reflektoren (26) angeordnet werden, die entlang der Verlagerungsbahn des Vorformlings in Abstand zueinander liegen.

10. Verfahren nach Anspruch 1, dadurch gekennzeichnet, daß wenigstens ein Ringbereich (36) des Körpers (2) des Vorformlings oder des Zwischenbehälters, oder mehrere Ringbereiche, die in Längsrichtung voneinander getrennt liegen, auf eine tiefere Temperatur als der des restlichen Körpers gebracht wird, wodurch in dem Körper des Vorformlings oder des Zwischenbehälters ein oder mehrere relativ weniger warme Ringbereiche (36) erzeugt werden, die mit relativ wärmeren Ringbereichen abwechseln und die so ausgebildet sind, daß sie sich im Verlauf einer späteren Verformung des Körpers des Vorformlings weniger leicht verformen als die letzteren, wobei dies gestattet, Behälter mit einem Körper herzustellen, der wenigstens eine verstärkte Umfangszone (39) mit erhöhter Dicke aufweist.

11. Verfahren nach Anspruch 10, zu dessen Durchführung der jeweils in Drehung um sich selbst (20) versetzte Vorformling durch einen Heizofen hindurch verlagert (D) wird, dadurch gekennzeichnet, daß der Körper des Vorformlings von einer Seite des Ofens aus erwärmt wird und daß die Wärmestrahlung von der entgegengesetzten Seite des Ofens aus in wenigstens einer nicht-reflektierenden Zone in Form eines Bandes (42) nicht reflektiert wird, welches sich im wesentlichen parallel zur Verlagerungsrichtung (D) des Vorformlings erstreckt und gegenüber wenigstens einem Ringbereich (36) des Körpers (2) des Vorformlings liegt, der relativ weniger erwärmt werden soll, wohingegen die Wärmestrahlung in wenigstens einer reflektierenden Zone in Form eines Bandes (41) reflektiert wird, das sich im wesentlichen parallel zur Verlagerungsrichtung des Vorformlings erstreckt und gegenüber dem Rest des Körpers des Vorformlings liegt, der relativ mehr erwärmt werden soll.

12. Verfahren nach einem der Ansprüche 6, 7, 8, 9, 11, dadurch gekennzeichnet, daß die nicht-reflektierenden Zonen ferner für die einfallende Wärmestrahlung absorbierend sind.

13. Herstellungsverfahren für einen Behälter, wie einen Kolben oder eine Flasche, ausgehend von einem Vorformling oder einem Zwischenbehälter aus thermoplastischem Material, dadurch gekennzeichnet, daß es wenigstens einen Schritt der Wärmebehandlung des Körpers des Vorformlings und/oder eines Zwischenbehälters gemäß einem der Ansprüche 1 bis 12 umfaßt.

14. Ofen für die Wärmebehandlung des Körpers (2) eines Vorformlings (1) oder eines Zwischenbehälters aus thermoplastischem Material im Verlauf eines Herstellungsprozesses von einem Behälter (1₃), wie einen Kolben oder eine Flasche, insbesondere durch ein Blasformungs- oder Streck-Blasformungsverfahren, wobei die Gesamtheit des Körpers (2) des Vorformlings auf eine höhere Temperatur als die Erweichungstemperatur des Materials erwärmt wird,
dadurch gekennzeichnet, daß dieser auf wenigstens einer Seite der Bewegungsbahn (D), welcher der jeweils in Drehung um sich selbst (18, 20) versetzte Vorformling folgt, eine Wechselfolge von heizenden Zonen (6, 26) und weniger oder nicht-heizenden Zonen (21, 25) aufweist, die gegenüber wenigstens einem Teil der Länge des Körpers des Vorformlings angeordnet sind, um wenigstens einen Längsbereich (13) des Körpers (2) des Vorformlings, oder mehrere umfangsmäßig voneinander getrennte Längsbereiche (13), der sich wenigstens über diesen Teil der Länge des Körpers erstreckt, auf eine noch höhere Temperatur als der des Restes des Körpers zu erwärmen, wobei der Abstand (d) der heizenden Zonen (6, 26) in Abhängigkeit von der Anzahl der Längsbereiche des Körpers des Vorformlings, die vorzugsweise erwärmt werden sollen, und der Stärke des Körpers des Vorformlings derart bestimmt wird, daß sich die Längsbereiche (13) des Körpers des vorzugsweise zu erwärmenden Vorformlings im Verlauf der kombinierten Verlagerungs- und Drehbewegungen des Vorformlings vor den aufeinanderfolgenden heizenden Zonen (6, 26) befinden, wohingegen sich die dazwischen liegenden Längsbereiche (14), die in geringerer Weise erwärmt werden sollen, vor den aufeinanderfolgenden weniger oder nicht-heizenden Zonen (21, 25) befinden.

15. Ofen nach Anspruch 14, dadurch gekennzeichnet, daß die Verlagerungsgeschwindigkeit des Vorformlings (1) und die Drehgeschwindigkeit des Vorformlings um sich selbst in etwa konstant sind, wobei die heizenden Zonen (6, 26) durch im wesentlichen konstante Intervalle (d) in gegenseitigem Abstand zueinander angeordnet sind.

16. Ofen nach Anspruch 14 oder 15, dadurch gekennzeichnet daß dieser eine auf wenigstens einer Seite des Ofens angeordnete diskontinuierliche Heizeinrichtung (6) umfaßt, die die oben genannten, aufeinanderfolgenden heizenden Zonen festlegt, die entlang der Verlagerungsbahn (D) des Vorformlings (1) in Abstand zueinander liegen.

17. Ofen nach Anspruch 16, dadurch gekennzeichnet, daß die diskontinuierliche Heizeinrichtung mehrere aufeinanderfolgende Heizelemente (6) umfaßt, die entlang der Verlagerungsbahn (D) des Vorformlings (1) in Abstand zueinander liegen.

18. Ofen nach Anspruch 16, dadurch gekennzeichnet, daß die diskontinuierliche Heizeinrichtung ein kontinuierliches Heizelement (6) und aufeinanderfolgende Abdeckungen umfaßt, die vor diesem angeordnet sind und die entlang der Verlagerungsbahn des Vorformlings in Abstand zueinander angeordnet sind.

19. Ofen nach einem der Ansprüche 14 bis 18, dadurch gekennzeichnet, daß dieser auf einer seiner Seiten wenigstens ein Heizelement (6) aufweist und daß dieser auf seiner gegenüberliegenden Seite Mittel (26) zur Reflexion von einfallender Wärmestrahlung aufweist, die derart angeordnet sind, daß sie aufeinanderfolgende, entlang der Verlagerungsbahn des Vorformlings in Abstand zueinander liegende, reflektierende Zonen bilden, die die oben genannten heizenden Zonen bilden.

20. Ofen nach Anspruch 19, dadurch gekennzeichnet daß die Reflektionsmittel auf der gegenüberliegenden Seite mehrere aufeinanderfolgende Reflektoren (26) umfassen, die entlang der Verlagerungsbahn (D) des Vorformlings (1) in Abstand zueinander liegen.

21. Ofen nach Anspruch 19, dadurch gekennzeichnet, daß die Reflektionsmittel auf der gegenüberliegenden Seite einen im wesentlichen durchgehenden Reflektor und, vor diesem angeordnet, aufeinanderfolgende nicht-reflektierende Abdeckungen aufweisen, die entlang der Verlagerungsbahn des Vorformlings in Abstand zueinander angeordnet sind.

22. Ofen nach Anspruch 9, dadurch gekennzeichnet, daß die Reflektionsmittel auf der gegenüberliegenden Seite eine im wesentlichen durchgehende, nicht-reflektierende Wand (25) und, vor dieser angeordnet, aufeinanderfolgende Reflektoren (26) aufweisen, die entlang der Verlagerungsbahn (D) des Vorformlings (1) in Abstand zueinander angeordnet sind.

23. Ofen nach Anspruch 22, dadurch gekennzeichnet, daß mehrere Reflektoren (26) wenigstens in einer gleichen Platte (32) entsprechend aufeinanderfolgender Zinnen zusammengefaßt und in abnehmbarer Weise vor der nicht-reflektierenden Wand (25) befestigt sind.

24. Ofen nach Anspruch 22 oder 23, dadurch gekennzeichnet, daß die nicht-reflektierende Wand gekühlt ist.

25. Ofen nach einem der Ansprüche 22 bis 24, dadurch gekennzeichnet, daß die nicht-reflektierende Wand durch eine Aufschichtung von Stäben (28) gebildet ist, deren dem Inneren des Ofens zugewandte Seite geschwärzt ist und die in vorteilhafter Weise von einem Kühlfluid durchströmt (30, 31) werden.

26. Ofen nach Anspruch 14, dadurch gekennzeichnet, daß dieser Mittel zum Erwärmen wenigstens eines Ringbereichs (36) des Körpers (2) des Vorformlings (1), oder mehrerer Ringbereiche (36), die in Längsrichtung voneinander getrennt sind, auf eine geringere Temperatur als der des Restes des Körpers des Vorformlings umfaßt.

27. Ofen nach Anspruch 26, dadurch gekennzeichnet, daß dieser auf einer Seite der Bewegungsbahn (D), welcher der jeweils in Drehung um sich selbst versetzte Vorformling (1) folgt, eine Heizeinrichtung aufweist und daß dieser auf der gegenüberliegenden Seite aufweist wenigstens eine für Wärmestrahlung nicht-reflektierende Zone (42), wobei sich die nicht-reflektierende Zone, die die Form eines Bandes hat, im wesentlichen parallel zur Verlagerungsrichtung des Vorformlings erstreckt und gegenüber wenigstens einem Ringbereich (36) des Körpers (2) des Vorformlings liegt, der relativ weniger warm sein soll, und wenigstens eine für Wärmestrahlung reflektierende Zone (41), wobei sich die reflektierende Zone (41), die die Form eines Bandes hat, im wesentlichen parallel zur Verlagerungsrichtung des Vorformlings erstreckt und gegenüber dem Rest des Körpers des Vorformlings liegt, der relativ wärmer sein soll.

28. Ofen nach einem der Ansprüche 19, 20, 21, 22, 23, 24, 25, 27, dadurch gekennzeichnet, daß die nicht-reflektierenden Zonen oder Wände (42) ferner für die einfallende Wärmestrahlung absorbierend sind.

29. Anlage zur Herstellung eines Behälters, wie einen Kolben oder eine Flasche, ausgehend von einem Vorformling oder einem Zwischenbehälter aus thermoplastischem Material, dadurch gekennzeichnet, daß diese wenigstens einen Ofen zur thermischen Behandlung des Körpers des Vorformlings oder des Zwischenbehälters gemäß einem der Ansprüche 14 bis 28 umfaßt.
